# EUROPÄISCHE PATENTSCHRIFT

(11) **EP 1 477 373 B1**
(45) Veröffentlichungstag und Bekanntmachung des Hinweises auf die Patenterteilung: **28.02.2007**
(21) Anmeldenummer: 04010959.7
(22) Anmeldetag: 07.05.2004
(51) Int. Cl.: B60R 21/20, B60N 2/50

(54) **Sitzintegriertes Fahrzeuginsassen-Rückhaltesystem und Fahrzeugsitz**
Seat integrated retainer system for an occupant of vehicle and seat
Système de retenu intégré au siège pour passager de véhicule

(30) Priorität: 13.05.2003 DE 10321459
(43) Veröffentlichungstag der Anmeldung: 17.11.2004
(73) Patentinhaber: TRW Automotive GmbH, 73553 Alfdorf (DE)
(72) Erfinder: Acker, Dominique, 74417 Gschwend (DE); Loos, Andreas, 73098 Rechberghausen (DE)
(74) Vertreter: Kitzhofer, Thomas

(56) Entgegenhaltungen:
- WO-A-98/49032
- DE-A1- 19 826 511
- DE-A1- 19 860 312
- DE-A1- 19 915 831

## Beschreibung

Die Erfindung betrifft ein sitzintegriertes Fahrzeuginsassen-Rückhaltesystem, mit einem Gassackmodul, das einen Gassack aufweist, einer das Gassackmodul nach außen verdeckenden Abdeckung, die wenigstens eine vorgegebene, zum Austritt des Gassacks aus dem Sitzinneren vorgesehene, bei gefaltetem Gassack geschlossene Austrittsöffnung, einen Sitzbezug, der sich mit seinem Randabschnitt nahe an die Austrittsöffnung erstreckt, und ein lagefest in der Lehne positioniertes Trägerteil besitzt, das die Austrittsöffnung bei gefaltetem Gassack geschlossen hält, wobei das Trägerteil und der Sitzbezug relativ zum Gassackmodul entkoppelt und relativ zum Gassackmodul verschieblich sind. Weiterhin betrifft die Erfindung einen Fahrzeugsitz.

Derartige sitzintegrierte Fahrzeuginsassen-Rückhaltesysteme werden im seitlichen Bereich der Sitzlehne untergebracht und schieben sich bei einem Seitenaufprall zwischen den Oberkörper und die Tür. Die bekannten Gassackmodule sind in die Seitenwange, genauer gesagt in ein geschäumtes Teil des Sitzes in diesen Bereich integriert. Der Sitzbezug weist eine vorgegebene Reißnaht auf, indem z.B. der Sitzbezug in einem bestimmten Bereich geschlitzt ist und der Schlitz vernäht ist oder indem zwei separate Abschnitte des Bezuges im Bereich der Reißnaht aneinander angrenzen und durch die Reißnaht miteinander verbunden sind. Die unterschiedlichen, angebotenen Materialien des Sitzbezugs besitzen unterschiedliche Dehnungsverhalten. Dies muß bei der Auslegung der Reißnaht berücksichtigt werden, denn die Reißnaht soll dem Öffnen einen geringen, in engen Grenzen vorbestimmbaren Widerstand entgegensetzen.

Aus der DE 199 15 831 A1 ist ein sitzintegriertes Fahrzeuginsassen-Rückhaltesystem gemäß dem Oberbegriff von Anspruch 1 bekannt, bei dem das Gassackmodul durch ein Kunststoffgehäuse begrenzt ist. Die aus Kunststoff bestehende Rückenschale der Sitzlehne erstreckt sich über die Seitenwand und bedeckt nach außen das Gassackmodul vollständig. Die Rückenschale erstreckt sich darüber hinaus auch über ein sich im Bereich der Seitenwand befindliches Polster und dessen Sitzbezug. Beim Aufblasen des Gassacks bleibt der Sitzbezug unzerstört, denn die Austrittsöffnung wird ausschließlich in der Rückenschale gebildet, deren Randbereich eine nach außen schwenkbare Klappe bildet.

Die DE 198 60 312 A1 zeigt ein sitzintegriertes Fahrzeuginsassen-Rückhaltesystem, bei dem ein Gassackmodul mit einem Außengehäuse aus Kunststoff vom Sitzbezug bedeckt ist. Der Sitzbezug ist geschlitzt, wobei die gegenüberliegenden Randabschnitte des Sitzbezugs an unterschiedlichen Stellen mit dem Außengehäuse des Gassackmoduls verbunden sind.

Die US 5 882 033 und die EP 0 826 565 A2 beschreiben sitzintegrierte Rückhaltesysteme, bei denen der Sitzbezug im Bereich der Austrittsöffnung zweigeteilt ist und die Austrittsöffnung durch ein Kunststoffteil verschlossen wird, das an den gegenüberliegenden, voneinander beabstandeten Rändern des Sitzbezuges befestigt ist. Das Kunststoffteil wirkt wie eine Klappe und bildet eine Einheit mit dem Sitzbezug, d.h. es bewegt sich mit diesem mit.

Die Erfindung schafft ein sitzintegriertes Fahrzeuginsassen-Rückhaltesystem, das sich durch eine Abdeckung mit einem Sitzbezug auszeichnet, der unabhängig von seinem Material dem Aufreißen einen in engen Grenzen vorbestimmbaren, geringen Widerstand entgegensetzt. Ferner soll das Gassackmodul einfach aufgebaut sein können und ein in engen Grenzen reproduzierbares Öffnungsverhalten des Sitzes erreicht werden.

Dies wird bei einem Fahrzeuginsassen-Rückhaltesystem der eingangsgennanten Art dadurch erreicht, daß das Träge

rteil an einem Lehnenrahmen und der nahe der Austrittsöffnung vorgesehene Randabschnitt des Sitzbezuges am Trägerteil befestigt ist.

Beim erfindungsgemäßen Fahrzeuginsassen-Rückhaltesystem werden die Randabschnitte des Sitzbezugs, die wenigstens abschnittsweise die Austrittsöffnung nach außen begrenzen, nicht aneinander befestigt. Das bedeutet, die Randabschnitte sind entweder im Bereich der Austrittsöffnung überhaupt nicht miteinander verbunden oder der Optik wegen nur minimal, wobei das Trägerteil dafür sorgt, daß die Austrittsöffnung geschlossen ist. Das Aufreißen der Abdeckung erfolgt am Trägerteil durch dessen Zerstörung, so daß das Material des Sitzbezugs keine Rolle spielt. Es kann für unterschiedliche Sitzbezugmaterialien immer das gleiche Trägerteil verwendet werden, so daß die einmal ermittelte Öffnungskraft trotz unterschiedlicher Materialien des Sitzbezugs gleich bleibt. Bei der Erfindung hat das Gassackmodul keine unmittelbare, direkte feste Verbindung mit dem Sitzbezug und dem Trägerteil. Dadurch kann das Gassackmodul, d.h. dessen Außengehäuse einfacher und kostengünstiger aufgebaut werden. Darüber hinaus bleiben Relativbewegungen zwischen dem Gässackmodul und der Abdeckung, die aufgrund von Temperaturschwankungen oder Bewegungen des Insassen oder anderen Einflüssen auf die Polsterung oder den Bezug ausgeübt werden, ohne gegenseitige Beeinflussung der Abdeckung und des Gassackmoduls. Auch aus diesem Grund muß das Außengehäuse des Moduls weniger stabil ausgeführt sein, denn es ist nicht den ständigen Belastungen aufgrund der oben genannten Relativbewegungen ausgesetzt. Schließlich ist das Trägerteil fest am Sitz fixiert. Da das Trägerteil üblicherweise eine Eigenstabilität besitzt, sorgt es für eine definierte Lage der Austrittsöffnung, z.B. unabhängig davon, ob sich der Insasse gerade bewegt hat. Dies sorgt insgesamt für ein sicheres Öffnungsverhalten. Der Randabschnitt des Sitzbezugs erstreckt sich bis nahe an die Austrittsöffnung und kann diese abschnittsweise nach außen hin begrenzen. Dies kann z.B. dadurch erfolgen, daß der Sitzbezug zwei aneinandergrenzende, sich gegenüberliegende Randabschnitte hat, die nicht unmittelbar miteinander verbunden sind, sondern an dem unter ihm verlaufenden Trägerteil. Darüber hinaus ist es natürlich möglich, daß ein Randabschnitt am Trägerteil befestigt ist und sich bis nahe an eine Schwächungslinie im Trägerteil erstreckt. Im Bereich der Schwächungslinie reißt dann die Abdeckung auf.

Das Trägerteil ist vorzugsweise innenseitig an dem Sitzbezug befestigt.

Die der Austrittsöffnung gegenüberliegenden Randabschnitte grenzen gemäß der bevorzugten Ausführungsform unmittelbar aneinander an, so daß von außen das Trägerteil nicht sichtbar ist.

Vorzugsweise liegen die Randabschnitte sogar aneinander an.

Das Trägerteil hat im Bereich der Austrittsöffnung eine vorgegebene Schwächungsstelle, vorzugsweise eine Perforation oder dergleichen, um leicht zerstört werden zu können.

Die Erfindung schafft auch einen weiteren Vorteil, nämlich eine verbesserte Formgebung der Lehne im Bereich des Moduls auf einfache Weise. Im Stand der Technik war, wie ja vorstehend erläutert, das Modul in das Seitenwangenschaumteil des Sitzes integriert, wobei der Schaum natürlich zur Austrittsöffnung möglichst freigelegt sein mußte, was die Sitzstruktur an dieser Stelle verschlechterte. Die Erfindung sieht gemäß der bevorzugten Ausführungsform vor, daß das Trägerteil eine größere Steifigkeit als der Sitzbezug hat. Das Trägerteil gibt also der Lehne im Bereich der Austrittsöffnung eine relativ steife Struktur.

Dies wird dadurch noch verbessert, daß das Trägerteil bevorzugt ein eigensteifes, das Modul zur Austrittsseite am Sitz umgreifendes Bauteil ist. Das Trägerteil definiert bei dieser Ausführungsform nicht nur den Bereich der Austrittsöffnung, sondern den gesamten Bereich der Sitzlehne in dem Bereich des Moduls, in dem die Austrittsöffnung liegt. Das Trägerbauteil kann sogar die Außengeometrie der Sitzlehne im Bereich des Gesamtmoduls festlegen. Hierbei ist vorgesehen, daß das Trägerteil am Lehnenrahmen befestigt und das Modul zwischen Lehnenrahmen und Trägerteil angeordnet ist.

Um das Gassackmodul von der Abdeckung möglichst in bezug auf Relativbewegungen zu entkoppeln, ist es beabstandet vom Trägerteil am Lehnenrahmen befestigt.

Das Trägerteil erstreckt sich gemäß einer Ausführungsform vom Lehnenrücken bis in die Seitenwand und kann in diesem Bereich auch sichtbar sein.

Der Sitzbezug ist bevorzugt am Trägerteil im Bereich seines Randabschnitts angenäht, wobei aber auch eine Rastverbindung möglich wäre.

Die Erfindung betrifft darüber hinaus auch einen Fahrzeugsitz, mit einem Lehnenrahmen und einem in der Lehne integrierten, erfindungsgemäßen Fahrzeuginsassen-Rückhaltesystem.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 einen erfindungsgemäßen Fahrzeugsitz, der mit dem erfindungsgemäßen Fahrzeuginsassen-Rückhaltesystem ausgestattet ist,
- Figur 2 einen Schnitt durch einen Seitenrand der Sitzlehne, der das sitzintegrierte Fahrzeuginsassen-Rückhaltesystem nach der Erfindung zeigt, nach der Linie II-II in Figur 1, und
- Figuren 3 bis 5 Schnittansichten durch den Seitenrand der Sitzlehne gemäß dreier weiterer Ausführungsformen des erfindungsgemäßen Fahrzeuginsassen-Rückhaltesystems.

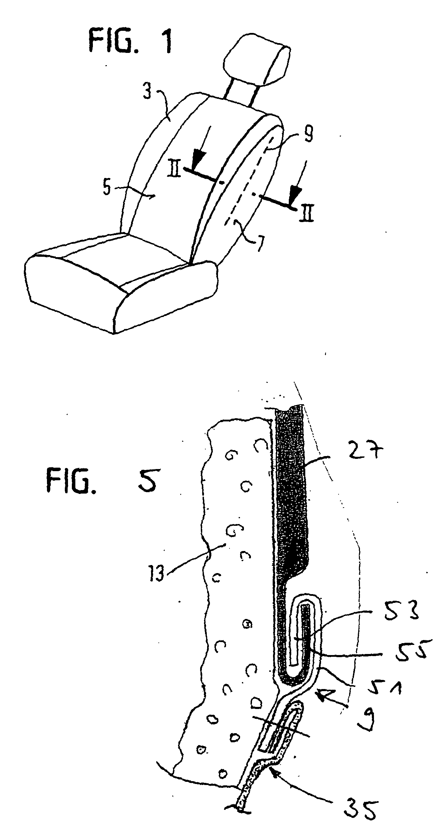

In Figur 1 ist ein Fahrzeugsitz dargestellt, der eine Sitzlehne 3 aufweist, die eine Vorderseite 5 und eine zur nächstgelegenen Fahrzeugtür weisende Seitenwand 7 besitzt.

In die Sitzlehne ist im Bereich des Brustkorbs ein Fahrzeuginsassen-Rückhaltesystem integriert, dessen Gassack bei einem Seitenaufprall aus der Seitenwand 7 im Bereich einer mit unterbrochenen Linien dargestellten, schlitzartigen Austrittsöffnung 9 heraustritt und den Oberkörper, gegebenenfalls auch den Kopf des Insassen schützen soll.

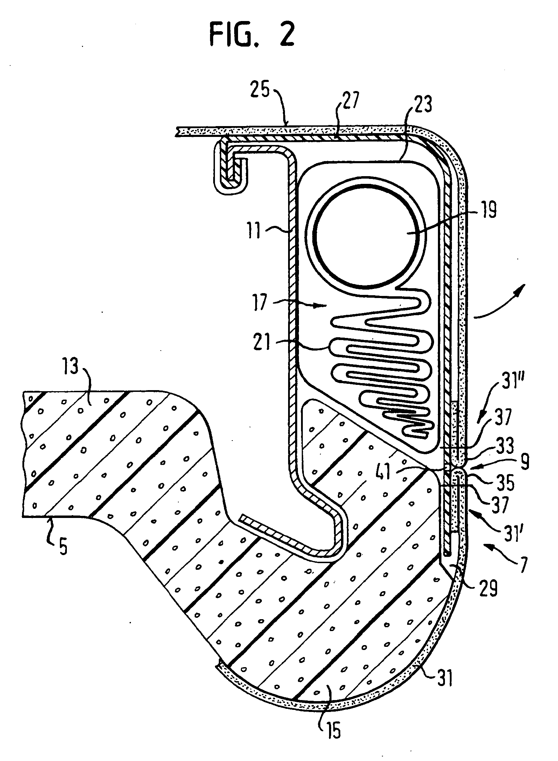

In Figur 2 ist das integrierte Fahrzeuginsassen-Rückhaltesystem besser zu erkennen. Die Sitzlehne hat einen Lehnenrahmen 11, der nur abschnittsweise dargestellt ist. Zur Vorderseite 5 besitzt die Lehne 3 eine geschäumte Polsterung 13, die sich in einen Seitenwulst 15 fortsetzt, der auch einen Teil der Seitenwand 7 definiert. Den anderen Teil der Seitenwand 7 definiert ein sitzintegriertes Gassackmodul 17, das einen Gasgenerator 19 und einen den Gasgenerator 19 umgebenden Gassack 21 aufweist. Das Gassackmodul 17 wird von einer relativ weichen, dünnen Außenhülle 23 umgeben und unmittelbar am Lehnenrahmen 11 befestigt, genauer gesagt an einem Seitenbereich des Lehnenrahmens 11.

Wie Figur 2 zu entnehmen ist, schließt das Gassackmodul 17 unmittelbar an die Polsterung 13 an und erstreckt sich von dieser aus bis zur Rückseite 25 der Lehne. Das Gassackmodul 17 ist seitlich nach außen und zur Rückseite 25 von einer Abdeckung bedeckt, die durch ein Trägerteil 27 und einen Sitzbezug 31 gebildet ist.

Das formstabile Trägerteil 27, z.B. aus Kunststoff, ist im Bereich der Rückseite 25 unmittelbar am Lehnenrahmen 11 befestigt und erstreckt sich seitlich über den Lehnenrahmen 11 hinaus, um dann längs der Seitenwand 17 nach vorne zu verlaufen und schließlich an der Polsterung 13 anzuliegen, die in dem Bereich des vorderen Randes des Trägerteils 27 eine Vertiefung 29 besitzt. Seitlich des Moduls 17 ist keine Polsterung 13 vorgesehen.

Das Trägerteil 27 hat eine Eigensteifigkeit, die größer ist als die Außenhülle 23 des Moduls 17. Das Trägerteil 27 umgibt das Gassackmodul 17, welches zwischen Trägerteil 27, Lehnenrahmen 11 und Polsterung 13 eingebettet ist. Eine weitere Aufgabe des Trägerteils 27 besteht darin, der Sitzlehne im Bereich des Gassackmoduls 17 eine relativ steife Außenstruktur zu geben und die Außengeometrie der Sitzlehne in diesem Bereich festzulegen. Da das Trägerteil 27 nicht unmittelbar mit dem Gassackmodul verbunden ist und eine gewisse Elastizität besitzt, kann es zusammen mit dem Sitzbezug 31 geringe Bewegungen relativ zum Gassackmodul 17 ausführen, ohne daß die Austrittsöffnung 9 nennenswert verschoben wird.

Das Trägerteil 27 ist aus diesem Grund auch deutlich steifer als der weiche Sitzbezug 31, der den gesamten Sitz außenseitig umgibt.

Im Bereich des vorderen Endes des Gassackmoduls 17 stoßen zwei Abschnitte 31', 31" des Sitzbezugs 31 aneinander. Die die Austrittsöffnung 9 definierenden Randabschnitte 33, 35 der beiden Abschnitte 31', 31" des Sitzbezugs 31 werden dadurch gebildet, daß der Sitzbezug in diesem Bereich jeweils nach innen umgeschlagen ist und beide Abschnitte 31', 31" des Sitzbezugs 31 mit dem Trägerteil 27 vernäht werden. Entsprechende Nähte sind mit dem Bezugszeichen 37 versehen. Die Abschnitte 31', 31" des Sitzbezugs 31 im Bereich der Randabschnitte 33, 35 sind nicht unmittelbar miteinander befestigt, sondern nur indirekt über das Trägerteil 27, obwohl die Randabschnitte 33, 35 unmittelbar aneinander anliegen.

Das Trägerteil 27 ist im Bereich der Austrittsöffnung 9 perforiert, weist also eine vorgegebene Schwächungsstelle 41 auf.

Nach dem Aktivieren des Gasgenerators 19 wird der Gassack 21 aufgeblasen, das Trägerteil 27 reißt längs der Schwächungsstelle 41 auf und drückt das flexible Trägerteil 27 in Pfeilrichtung nach außen, so daß die Austrittsöffnung 9 freigelegt wird. Das Trägerteil 27 dient dann auch als Führungshilfe für den Gassack 21, der sich nach vorne entfaltet.

Der Sitzbezug 31 kann aus Stoff, Kunstleder oder Leder sein, wobei im Bereich der Austrittsöffnung 9 auch unterschiedliche Materialien des Sitzbezugs 31 aufeinandertreffen können, zumal in diesem Bereich auch gerne ein Materialwechsel von Stoff zum abwaschbaren Kunstleder oder von Leder zum kostengünstigeren Kunstleder vollzogen wird.

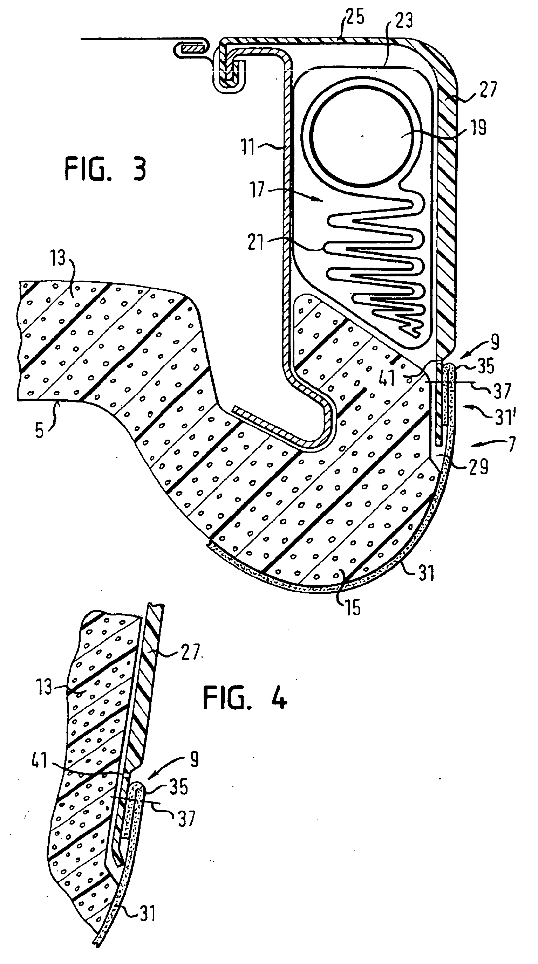

Bei der Ausführungsform nach Figur 3 ist das Trägerteil 27 sichtbar und nicht vom Sitzbezug 31 komplett abgedeckt. Das Trägerteil 27 erstreckt sich vom Bereich der Rückseite 25 aus zur Seitenwand 7, die es abschnittsweise bildet. Der Sitzbezug 31 erstreckt sich von der Vorderseite bis über den vorderen Rand des Trägerteils 27 bis unmittelbar zur Schwächungsstelle 41 und ist mit dem Trägerteil 27 vernäht.

Bei der Ausführungsform nach Figur 4 ist unterhalb des Trägerteils 27 noch das Polster 13 vorgesehen, das auch seitlich des Gassackmoduls 17 vorgesehen ist. Das Polster 13 kann das Trägerteil 27 etwas stützen.

Bei sämtlichen bislang gezeigten Ausführungsformen ist ein kleiner Spalt zwischen der Abdeckung und der Außenhülle 23 vorgesehen, so daß das Gassackmodul 17 nicht mit der Abdeckung in Berührung kommt.

Bei der Ausführungsform nach Figur 5 wiederum ist an dem ungeschlagenen Randabschnitt 35 eine Kunststoffleiste 51 angenäht, die einen nach innen verlaufenden Rand 53 ergibt, so daß die Leiste 51 einen U-förmigen Abschnitt bildet. In diesen Abschnitt greift ein ebenfalls U-förmiger unterer Rand des Trägerteils 27 ein. Die Leiste 51 entrastet vom Trägerteil 27, sobald das Gassackmodul 17 aktiviert wird.

Zu betonen ist, daß das erfindungsgemäße Fahrzeuginsassen-Rückhaltesystem nicht nur in einen Fahrzeugsitz, sondern auch in eine Rücksitzbank integriert werden kann, und daß die Austrittsseite an der Lehne nicht unbedingt die Seitenwand derselben sein muß, denn es wäre auch möglich, den Gassack an der Vorder- oder der Rückseite der Lehne und auch zwischen den Insassen austreten zu lassen.

## Patentansprüche

1. Sitzintegriertes Fahrzeuginsassen-Rückhaltesystem, mit
einem Gassackmodul (17), das einen Gassack (21) aufweist,
einer das Gassackmodul (17) nach außen verdeckenden Abdeckung, die wenigstens eine vorgegebene, zum Austritt des Gassacks (21) aus dem Sitzinneren vorgesehene, bei gefaltetem Gassack (21) geschlossene Austrittsöffnung (9), einen Sitzbezug (31), der sich mit seinem Randabschnitt (33, 35) nahe an die Austrittsöffnung (9) erstreckt, und ein lagefest in der Lehne positioniertes Trägerteil (27) besitzt, das die Austrittsöffnung (9) bei gefaltetem Gassack (21) geschlossen hält,
wobei das Trägerteil (27) und der Sitzbezug (31) relativ zum Gassackmodul (17) entkoppelt und relativ zum Gassackmodul (17) verschieblich sind,
**dadurch gekennzeichnet, daß** das Trägerteil (27) an einem Lehnenrahmen (11) und der nahe der Austrittsöffnung (9) vorgesehene Randabschnitt (33, 35) des Sitzbezugs (31) am Trägerteil (27) befestigt ist.

2. Sitzintegriertes Fahrzeuginsassen-Rückhaltesystem nach Anspruch 1, **dadurch gekennzeichnet, daß** die bezüglich der Austrittsöffnung (9) gegenüberliegenden Randabschnitte (33, 35) des Sitzbezugs (31) nicht unmittelbar miteinander verbunden sind.

3. Sitzintegriertes Fahrzeuginsassen-Rückhaltesystem nach Anspruch 1 oder 2, **dadurch gekennzeichnet, daß** die bezüglich der Austrittsöffnung (9) gegenüberliegenden Randabschnitte (33, 35) des Sitzbezugs (31) unmittelbar aneinander angrenzen.

4. Sitzintegriertes Fahrzeuginsassen-Rückhaltesystem nach einem der vorhergehenden Ansprüche, **dadurch gekennzeichnet, daß** die bezüglich der Austrittsöffnung (9) gegenüberliegenden Randabschnitte (33, 35) des Sitzbezugs (31) aneinander anliegen.

5. Sitzintegriertes Fahrzeuginsassen-Rückhaltesystem nach einem der vorhergehenden Ansprüche, **dadurch gekennzeichnet, daß** das Trägerteil (27) im Bereich der Austrittsöffnung (9) eine vorgegebene Schwächungsstelle (41) hat.

6. Sitzintegriertes Fahrzeuginsassen-Rückhaltesystem nach Anspruch 5, **dadurch gekennzeichnet, daß** die Schwächungsstelle (41) eine Perforation ist.

7. Sitzintegriertes Fahrzeuginsassen-Rückhaltesystem nach einem der vorhergehenden Ansprüche, **dadurch gekennzeichnet, daß** das Trägerteil (27) eine größere Steifigkeit als der Sitzbezug (31) hat.

8. Sitzintegriertes Fahrzeuginsassen-Rückhaltesystem nach einem der vorhergehenden Ansprüche, **dadurch gekennzeichnet, daß** das, Trägerteil (27) ein eigensteifes, das Gassackmodul (17) zur Austrittsseite (7) des Gassacks (21) am Sitz umgreifendes Bauteil ist.

9. Sitzintegriertes Fahrzeuginsassen-Rückhaltesystem nach einem der vorhergehenden Ansprüche, **dadurch gekennzeichnet, daß** das Trägerteil (27) die Außengeometrie der Sitzlehne (7) im Bereich des Gassackmoduls (17) festlegt.

10. Sitzintegriertes Fahrzeuginsassen-Rückhaltesystem nach einem der vorhergehenden Ansprüche, **dadurch gekennzeichnet, daß** das Gassackmodul (17) zwischen Lehnenrahmen (11) und Trägerteil (27) liegt.

11. Sitzintegriertes Fahrzeuginsassen-Rückhaltesystem nach einem der vorhergehenden Ansprüche, **dadurch gekennzeichnet, daß** das Gassackmodul (17) eine Außenhülle (23) mit einer geringeren Steifigkeit als das Trägerteil (27) besitzt.

12. Sitzintegriertes Fahrzeuginsassen-Rückhaltesystem nach einem der vorhergehenden Ansprüche, **dadurch gekennzeichnet, daß** das Gassackmodul (17) beabstandet vom Trägerteil (27) am Lehnenrahmen (11) befestigt ist.

13. Sitzintegriertes Fahrzeuginsassen-Rückhaltesystem nach einem der vorhergehenden Ansprüche, **dadurch gekennzeichnet, daß** das Trägerteil (27) Abschnitte der Austrittsöffnung (9) begrenzt.

14. Sitzintegriertes Fahrzeuginsassen-Rückhaltesystem nach einem der vorhergehenden Ansprüche, **dadurch gekennzeichnet, daß** sich das Trägerteil (27) von dem Lehnenrücken bis in die Seitenwand erstreckt.

15. Sitzintegriertes Fahrzeuginsassen-Rückhaltesystem nach einem der vorhergehenden Ansprüche, **dadurch gekennzeichnet, daß** der Sitzbezug (31) an dem Trägerteil angenäht ist.

16. Fahrzeugsitz, mit einem Lehnenrahmen (11) und einem in der Lehne integrierten Fahrzeuginsassen-Rückhaltesystem nach einem der vorhergehenden Ansprüche.

## Claims

1. A seat-integrated vehicle occupant restraint system, comprising
a gas bag module (17) which has a gas bag (21),
a cover which covers the gas bag module (17) externally and which has at least one predefined outlet opening (9) provided for the exit of the gas bag (21) from the interior of the seat and closed when the gas bag (21) is folded, a seat covering (31) the edge section (33, 35) of which extends close to the outlet opening (9), and a carrier part (27) which is firmly positioned in the backrest and which keeps the outlet opening (9) closed when the gas bag (21) is folded,
the carrier part (27) and the seat covering (31) being decoupled relative to the gas bag module (17) and being movable relative to the gas bag module (17),
**characterized in that** the carrier part (27) is fastened to a backrest frame (11) and the edge section (33, 35) of the seat covering (31) provided near the outlet opening (9) is fastened to the carrier part (27).

2. The seat-integrated vehicle occupant restraint system according to Claim 1, **characterized in that** the edge sections (33, 35) of the seat covering (31) located opposite with respect to the outlet opening (9) are not connected directly with each other.

3. The seat-integrated vehicle occupant restraint system according to Claim 1 or 2, **characterized in that** the edge sections (33, 35) of the seat covering (31) located opposite with respect to the outlet opening (9) adjoin each other directly.

4. The seat-integrated vehicle occupant restraint system according to any of the preceding claims, **characterized in that** the edge sections (33, 35) of the seat covering (31) located opposite with respect to the outlet opening (9) abut against each other.

5. The seat-integrated vehicle occupant restraint system according to any of the preceding claims, **characterized in that** the carrier part (27) has a predefined weakened point (41) in the region of the outlet opening (9).

6. The seat-integrated vehicle occupant restraint system according to Claim 5, **characterized in that** the weakened point (41) is a perforation.

7. The seat-integrated vehicle occupant restraint system according to any of the preceding claims, **characterized in that** the carrier part (27) has a greater rigidity than the seat covering (31).

8. The seat-integrated vehicle occupant restraint system according to any of the preceding claims, **characterized in that** the carrier part (27) is an inherently rigid component embracing the gas bag module (17) to the outlet side (7) of the gas bag (21) on the seat.

9. The seat-integrated vehicle occupant restraint system according to any of the preceding claims, **characterized in that** the carrier part (27) determines the outer geometry of the seat backrest (7) in the region of the gas bag module (17).

10. The seat-integrated vehicle occupant restraint system according to any of the preceding claims, **characterized in that** the gas bag module (17) is located between the backrest frame (11) and the carrier part (27).

11. The seat-integrated vehicle occupant restraint system according to any of the preceding claims, **characterized in that** the gas bag module (17) has an outer casing (23) which has a lower rigidity than the carrier part (27).

12. The seat-integrated vehicle occupant restraint system according to any of the preceding claims, **characterized in that** the gas bag module (17) is fastened to the backrest frame (11) at a distance from the carrier part (27).

13. The seat-integrated vehicle occupant restraint system according to any of the preceding claims, **characterized in that** the carrier part (27) delimits portions of the outlet opening (9).

14. The seat-integrated vehicle occupant restraint system according to any of the preceding claims, **characterized in that** the carrier part (27) extends from the back of the backrest as far as into the side wall.

15. The seat-integrated vehicle occupant restraint system according to any of the preceding claims, **characterized in that** the seat covering (31) is sewn to the carrier part.

16. A vehicle seat comprising a backrest frame (11) and a vehicle occupant restraint system integrated in the backrest, according to any of the preceding claims.

## Revendications

1. Système de retenue de passager de véhicule, intégré dans un siège, comportant
un module de coussin à gaz (17) qui présente un coussin à gaz (21),
un couvercle recouvrant le module de coussin à gaz (17) à l'extérieur, lequel possède au moins une ouverture de sortie (9) prédéterminée, prévue pour la sortie du coussin à gaz (21) hors de l'intérieur du siège, fermée lorsque le coussin à gaz (21) est plié, une housse de siège (31) qui s'étend avec son tronçon de bord (33, 35) à proximité de l'ouverture de sortie (9), et une pièce support (27) qui maintient fermée l'ouverture de sortie (9) lorsque le coussin à gaz (21) est plié,
la pièce support (27) et la housse de siège (31) sont découplées par rapport au module de coussin à gaz (17) et déplaçables par rapport au module de coussin à gaz (17),
**caractérisé en ce que** la pièce support (27) est fixée sur un cadre de dossier (11), et le tronçon de bord (33, 35) de la housse de siège, prévu à proximité de l'ouverture de sortie (9), est fixé sur la pièce support (27).

2. Système de retenue de passager de véhicule, intégré dans un siège, selon la revendication 1, **caractérisé en ce que** les tronçon de bord (33, 35) de la housse de siège (31), qui sont situés l'un en face de l'autre par rapport à l'ouverture de sortie (9) ne sont pas directement reliés l'un à l'autre.

3. Système de retenue de passager de véhicule, intégré dans un siège, selon la revendication 1 ou 2, **caractérisé en ce que** les tronçon de bord (33, 35) de la housse de siège (31), qui sont situés l'un en face de l'autre par rapport à l'ouverture de sortie (9) sont directement adjacents l'un à l'autre.

4. Système de retenue de passager de véhicule, intégré dans un siège, selon l'une des revendications précédentes, **caractérisé en ce que** les tronçon de bord (33, 35) de la housse de siège (31), qui sont situés l'un en face de l'autre par rapport à l'ouverture de sortie (9) sont en appui l'un contre l'autre.

5. Système de retenue de passager de véhicule, intégré dans un siège, selon l'une des revendications précédentes, **caractérisé en ce que** la pièce support (27) a un point d'affaiblissement (41) prédéterminé dans la région de l'ouverture de sortie (9).

6. Système de retenue de passager de véhicule, intégré dans un siège, selon la revendication 5, **caractérisé en ce que** le point d'affaiblissement (41) est une perforation.

7. Système de retenue de passager de véhicule, intégré dans un siège, selon l'une des revendications précédentes, **caractérisé en ce que** la pièce support (27) a une plus grande rigidité que la housse de siège (31).

8. Système de retenue de passager de véhicule, intégré dans un siège, selon l'une des revendications précédentes, **caractérisé en ce que** la pièce support (27) est un composant rigide en soi, enveloppant le module de coussin à gaz (17) vers le côté de sortie (7) du coussin à gaz (21) sur le siège.

9. Système de retenue de passager de véhicule, intégré dans un siège, selon l'une des revendications précédentes, **caractérisé en ce que** la pièce support (27) définit la géométrie extérieure du dossier de siège (7) dans la région du module de coussin à gaz (17).

10. Système de retenue de passager de véhicule, intégré dans un siège, selon l'une des revendications précédentes, **caractérisé en ce que** le module de coussin à gaz (17) est situé entre le cadre de dossier (11) et la pièce support (27).

11. Système de retenue de passager de véhicule, intégré dans un siège, selon l'une des revendications précédentes, **caractérisé en ce que** le module de coussin à gaz (17) possède une enveloppe extérieure (23) avec une rigidité plus faible que la pièce support (27).

12. Système de retenue de passager de véhicule, intégré dans un siège, selon l'une des revendications précédentes, **caractérisé en ce que** le module de coussin à gaz (17) est fixé sur le cadre de dossier (11) à distance de la pièce support (27).

13. Système de retenue de passager de véhicule, intégré dans un siège, selon l'une des revendications précédentes, **caractérisé en ce que** la pièce support (27) limite des tronçons de l'ouverture de sortie (9).

14. Système de retenue de passager de véhicule, intégré dans un siège, selon l'une des revendications précédentes, **caractérisé en ce que** la pièce support (27) s'étend depuis le dos du dossier jusque dans la paroi latérale.

15. Système de retenue de passager de véhicule, intégré dans un siège, selon l'une des revendications précédentes, **caractérisé en ce que** la housse de siège (31) est cousue sur la pièce support.

16. Siège de véhicule, comportant un cadre de dossier (11) et un système de retenue de passager de véhicule, intégré dans le dossier, selon l'une des revendications précédentes.
